# DEMANDE DE BREVET EUROPEEN

(11) **EP 3 401 169 A1**
(43) Date de publication de la demande: **14.11.2018**
(21) Numéro de dépôt: 18167252.8
(22) Date de dépôt: 13.04.2018
(51) Int. Cl.: B60R 25/20, B60R 25/04

(54) **PROCÉDÉ ET SYSTÈME ANTIVOL DE VÉHICULE AUTOMOBILE AVEC DÉCLENCHEMENT D ALARME**

(30) Priorité: 09.05.2017 FR 1754023
(71) Demandeur: PSA Automobiles SA, 78300 Poissy (FR)
(72) Inventeur: SULLET, Xavier, 91120 Palaiseau (FR); DHAINAUT, Jean Marc, 75007 Paris (FR)

(57) **Abrégé**

L'invention concerne un procédé d'antivol de véhicule automobile avec déclenchement d'alarme, ce procédé consistant à activer une fonction anti car-jacking (étape 21) dès le démarrage du moteur (étape 20), arrêter le moteur et déclencher une alarme (étape 25) vers un centre distant avec une géolocalisation du véhicule lorsque les conditions suivantes sont réunies :
- vitesse de déplacement du véhicule nulle (étape 22), correspondant à un état du moteur déterminé entre moteur en marche, en état « stop » dans le cas d'intervention d'une fonction de type « stop and go », et en état arrêté par une coupure d'alimentation du moteur ;
- intégrité du véhicule mise en cause (étape 23) par une ouverture d'ouvrant de l'habitacle du véhicule ; et
- détection de changement de conducteur (étape 24).

## Description

### DOMAINE TECHNIQUE

L'invention se rapporte à un procédé d'antivol de véhicule automobile avec déclenchement d'alarme, plus particulièrement destiné à pallier le vol de véhicule par car-jacking, c'est-à-dire un vol par intrusion forcée d'un car-jacker (le voleur) sous l'effet d'une menace physique, le car-jacker devenant alors le conducteur illégitime du véhicule. L'invention se rapportant également à un système de gestion.

Dans le domaine de la lutte contre le vol de véhicule sous menace physique, les constructeurs automobiles ont apporté des solutions palliatives. Une première solution consiste à déclencher un verrouillage automatique de toutes portières dès le démarrage du véhicule. De plus, dans le cas où une vitre est brisée par le car-jacker alors que le conducteur est au volant, une solution appelée « super-condamnation » bloque les serrures d'ouverture des portières et/ou de la colonne de direction.

### ÉTAT DE LA TECHNIQUE

Dans le cas de vol sans bris de vitre, des solutions ont également été apportées par une détection appropriée dans le cas le conducteur est contraint d'ouvrir sa porte sous la menace. Notamment, le document BE1007624 décrit un dispositif antivol comprenant un commutateur disposé dans le véhicule de manière à être actionné lorsqu'un conducteur a pris les commandes du véhicule afin de démarrer un cycle de temporisation, et un premier moyen de commutation connecté pour être actionné en réponse à l'action du commutateur précité. Ce moyen de commutation est agencé pour immobiliser le véhicule après un intervalle de temps prédéterminé.

Un autre document FR2739821 décrit un dispositif antivol pour véhicule automobile arrêté et moteur tournant. Ce dispositif comporte en combinaison un moyen d'inhibition du fonctionnement du moteur; au moins deux moyens de détection de sortie du conducteur du véhicule (des capteurs, par exemple), et un moyen de détection d'une tentative d'utilisation du véhicule (un capteur sur la pédale d'embrayage, par exemple). Une unité centrale électronique gère les informations émises par les moyens de détection et d'émission de signaux vers le moyen d'inhibition du fonctionnement du moteur dans le cas d'une tentative d'utilisation du véhicule. Le moyen d'inhibition est activé sans saisie préalable de code.

Il est également connu du document WO2010040258 un système antivol pour véhicule comprenant un ordinateur de bord, une unité de verrouillage et une unité d'alarme. L'unité de verrouillage, via l'ordinateur de bord, commande la fermeture ou l'ouverture du verrou de la colonne de direction et du verrou du capot moteur.

Cependant, aucune de ces solutions ne permet d'intervenir directement et quasi-instantanément en cas de car-jacking d'un véhicule automobile.

### EXPOSÉ DE L'INVENTION

L'invention vise à s'affranchir de ces inconvénients. Pour ce faire, l'invention prévoit d'utiliser la connectivité installée sur les véhicules automobiles.

Plus précisément, la présente invention a pour objet un procédé d'antivol de véhicule automobile avec déclenchement d'alarme, ce procédé utilisant des fonctionnalités d'un système de gestion du véhicule et d'un centre distant par téléphonie mobile avec le véhicule, ainsi que des données relatives à l'état et/ou au changement d'état du véhicule, de son habitacle et de son moteur d'entraînement, ce procédé consistant à : activer une fonction anti car-jacking dès le démarrage du moteur, arrêter le moteur et déclencher une alarme vers le centre distant avec une géolocalisation du véhicule lorsque les conditions suivantes sont réunies :
- vitesse de déplacement du véhicule nulle, correspondant à un état du moteur déterminé entre moteur en marche, en état « stop » dans le cas d'intervention d'une fonction de type « stop and go », et en état arrêté par une coupure d'alimentation du moteur;
- intégrité du véhicule mise en cause par une ouverture d'ouvrant de l'habitacle du véhicule, et
- détection de changement de conducteur.

Selon des modes de réalisation particulièrement avantageux :
- suite au déclenchement de l'alarme, le centre distant transmet une demande de communication d'un code secret prédéfini au conducteur du véhicule automobile: en cas de réception dudit code secret par le centre distant, le véhicule automobile est autorisé à démarrer après une durée prédéterminée et, en cas de non réception du code secret - à savoir aucune réception ou réception d'un code erroné - par le centre distant, ce dernier transmet une alerte de vol avec la géolocalisation du véhicule à un service d'intervention ;
- en cas de non réception du code secret par le centre distant, le centre distant déclenche la diffusion dans le véhicule via le système de gestion d'au moins un message préenregistré, message oral ou message texte, informant le conducteur qu'une procédure de recherche du véhicule est lancée par le service d'intervention;
- en cas de non réception du code secret par le centre distant, celui-ci déclenche également, via le système de gestion, une sonnerie d'alarme dans le véhicule pendant une durée prédéterminée ;
- l'atteinte à l'intégrité du véhicule est définie par au moins l'une des actions suivantes: une ouverture de portière, une ouverture de vitre et un bris de vitre ;
- la détection d'un changement de conducteur est choisie parmi au moins l'une des conditions suivantes: un déverrouillage de ceinture de sécurité, le non-verrouillage de cette ceinture, une détection d'une absence temporaire sur le siège du conducteur, une détection d'un changement de conducteur et une absence temporaire de mains sur le volant ;
- le démarrage et l'arrêt de ce procédé peuvent être déclenchés par une même commande, notamment sur un écran tactile d'aide à la conduite ;
- l'activation du procédé d'antivol avec déclenchement d'alarme est paramétrée soit avec un mode manuel d'activation différée, soit un mode automatique d'activation immédiate ; et
- une interruption temporaire de la fonction anti car-jacking est possible dans le cas d'une activation automatique de cette fonction, en particulier pour permettre un changement de conducteur.

L'invention se rapporte également à un véhicule automobile comportant un moteur principal, un habitacle avec des ouvrants et un siège conducteur, et un système de gestion moteur de mise en oeuvre du procédé d'antivol selon l'invention et comportant un boitier électronique relié à des détecteurs de vitesse du véhicule, d'état des ouvrants et de présence de conducteur, ainsi qu'à une commande d'arrêt du. Dans ce système, le boitier électronique est également relié à un équipement de téléphonie mobile en liaison avec un traceur GPS pouvant communiquer une alarme, ainsi qu'à un haut-parleur pouvant diffuser des messages préenregistrés dans le boitier électronique.

### PRÉSENTATION DES FIGURES

D'autres données, caractéristiques et avantages de la présente invention apparaîtront à la lecture de la description non limitée qui suit, en référence aux figures annexées qui représentent, respectivement:
- la figure 1, un exemple schématique de système de gestion de véhicule selon l'invention; et
- la figure 2, un exemple de logigramme de mise en oeuvre du procédé d'antivol selon l'invention.

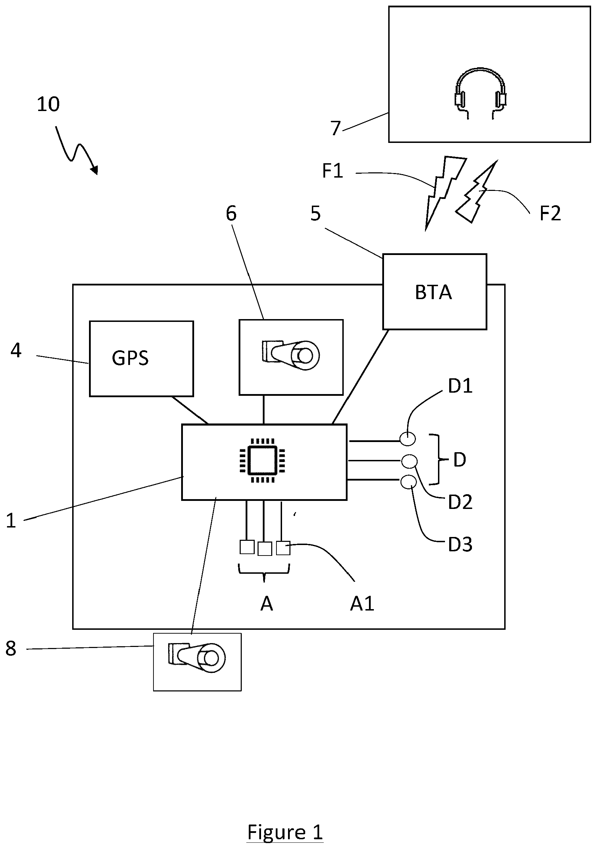

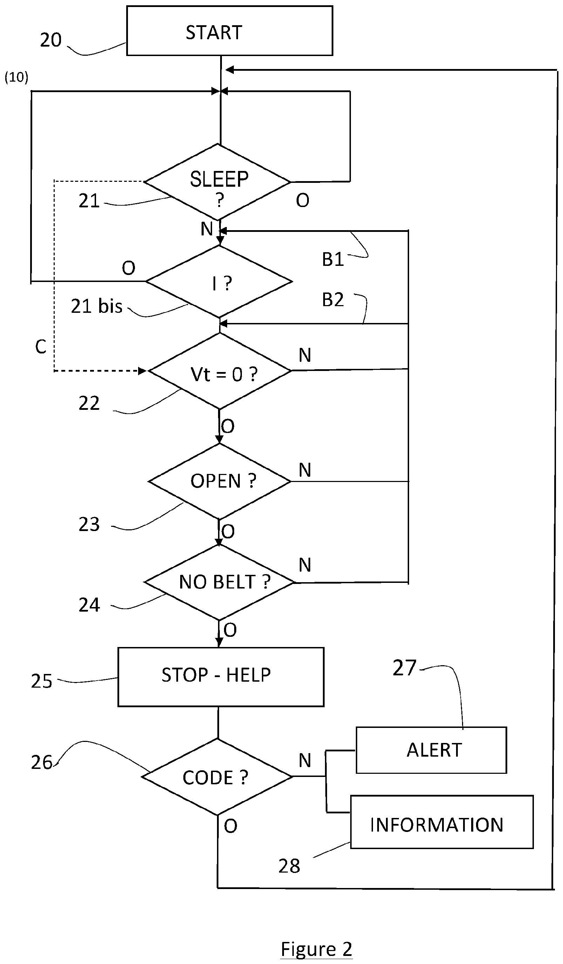

Dans les figures du présent texte, des éléments identiques sont repérés par un même signe de référence qui renvoie au(x) passage(s) de la description qui le mentionne(nt). En particulier, les références au système de gestion et à ses équipements indiquées dans la description de l'exemple de procédé de la figure 2 se rapportent à la figure 1.

### DESCRIPTION DÉTAILLÉE

La figure 1 présente un exemple schématique de système de gestion 10 selon l'invention, installé sous le capot d'un véhicule automobile dans cet exemple de réalisation. Dans d'autres exemples de réalisation, ce système de gestion peut être partiellement ou totalement installé dans l'habitacle du véhicule automobile, certains de ses équipements pouvant rester sous le capot, par exemple la partie « A » gérant différents actionneurs. Ce système de gestion 10 comporte un boitier électronique 1 relié à différents détecteurs « D »: capteur de vitesse du véhicule D1, détecteurs d'état des ouvrants du véhicule D2 et de présence de conducteur D3 dans cet exemple de réalisation. A partir des données fournies par les détecteurs « D », le système de gestion 10 assure une gestion d'équipements du moteur et de l'habitacle dans lesquels ils sont installés. Le boitier électronique 1 est également relié à différents actionneurs « A » de commande des organes du moteur du véhicule, en particulier la commande d'arrêt du moteur A1.

De plus, le boitier électronique 1 est relié à un traceur GPS 4 de géolocalisation pour communiquer la géolocalisation du véhicule à un centre distant prédéterminé, le centre d'appels 7 dans cet exemple de réalisation. Cette communication concernant la géolocalisation est réalisée par un équipement de traitement de données de téléphonie mobile 5, cet équipement 5 étant, dans l'exemple de réalisation illustré, un boitier télématique autonome (BTA). L'équipement de téléphonie mobile 5 reçoit également des messages texte codant des commandes venant du centre d'appels 7 - par le réseau GSM (flèche F1) - pour les transmettre au boitier électronique 1.

Le boitier électronique 1 dispose avantageusement de messages préenregistrés qui peuvent être diffusés par un haut-parleur de l'habitacle 8 dans les conditions détaillées ci-après. Il comporte également un haut-parleur 6 destiné à diffuser un avertisseur sonore local, sous le capot du véhicule dans l'exemple de réalisation. Ainsi équipé, le système de gestion 10 est apte à mettre en oeuvre le procédé d'antivol présenté ci-dessous en référence à la figure 2.

La figure 2 montre donc un exemple de logigramme du procédé d'implémentation du procédé d'antivol selon l'invention. Ce procédé commence à l'étape 20 par un actionnement du contact de démarrage « START » du moteur du véhicule automobile.

Le test « SLEEP ? » de l'étape 21 qui suit l'étape 20 de démarrage du moteur se rapporte au déclenchement de la fonction anti car-jacking dite ci-après « ACJ », en mode automatique ou manuel. L'étape 21 est ici préalablement paramétrée pour rendre l'activation automatique de cette fonction ACJ dès la mise sous tension du système de gestion 10. Alternativement, le conducteur peut choisir à l'étape 21 d'activer en mode manuel la fonction ACJ (flèche « O»). La fonction ACJ est alors en veille avant une activation manuelle différée, cette activation manuelle pouvant intervenir à tout instant après le démarrage du véhicule, par exemple dans des zones considérées à risque, comme un centre-ville avec embouteillage.

Le test 21 bis constitue une option d'interruption temporaire « I » du processus dans le cas où la fonction ACJ est automatiquement lancée. Cette désactivation temporaire permet par exemple un changement de conducteur sans déclencher les étapes actives de la fonction ACJ décrites ci-après. L'interruption temporaire « I » est activée et désactivée par le conducteur du véhicule, et dans ce cas, la fonction ACJ passe en mode manuel. Si le conducteur ne déclenche pas d'interruption « I » en mode automatique ou si la fonction ACJ est en mode manuel, le processus enchaîne sur les étapes 22 à 24 décrites ci-après.

Lorsque la fonction ACJ est initialement mise en veille en mode manuel à l'étape 21, l'étape de test 21 bis ne s'applique pas et, lorsque le conducteur supprime le mode veille de la fonction ACJ pour rendre cette fonction active de manière différée, le processus enchaîne alors sur les étapes qui suivent sans passer par l'étape 21 bis (flèche d'enchaînement en traits pointillés « C »).

Lorsque la fonction ACJ est activée, que ce soit en mode automatique ou manuel, trois tests (étapes 22, 23 et 24) sont déclenchés, et si les trois tests ont une réponse positive « O », le procédé passe à l'étape 25 « STOP-HELP » comme décrit ci-après.

L'étape 22 concerne la vitesse du véhicule « Vt ». Lorsque la vitesse - détectée par le capteur D1 - devient nulle, le test est positif (flèche « O »). La vitesse peut devenir nulle alors que le moteur tourne encore ou lorsque le moteur ne tourne plus, soit que le moteur se met en état stop dans le cas où le véhicule est équipé de la fonction « stop and go » soit, suivant la stratégie du conducteur, par coupure de l'alimentation du moteur (par le bouton ou la clef de contact).

L'intégrité du véhicule est visée à l'étape 23, l'intégrité se rapporte à l'état et aux changements d'état des ouvrants de l'habitacle du véhicule, portières et vitres (captés par les détecteurs D2: si une portière est ouverte, en particulier la portière du conducteur, et/ou en cas d'ouverture de vitre (ouverture électrique ou manuelle) ou de bris de vitre (le bris étant considéré comme une ouverture forcée), le test « OPEN ? » est positif (flèche « O »).

Et l'étape 24 se rapporte à la détection d'un changement de conducteur dans l'habitacle du véhicule (capté par le détecteur D3: lorsque la ceinture de sécurité du siège conducteur n'est pas fermée, le test « NO BELT » est positif (flèche « O »). Alternativement ou cumulativement, la détection d'un changement de conducteur peut s'effectuer par l'absence temporaire sur le siège du conducteur et/ou par l'absence temporaire de mains sur le volant.

Lorsque les trois tests 22 à 24 sont positifs (flèches « O ») - l'ordre des tests étant indifférents, seul le cumul de réponses positives aux trois tests est alors à considérer - un signal de blocage « STOP-HELP » est transmis au moteur du véhicule automobile à l'étape 25 (par la commande d'arrêt A1) après une durée prédéterminée, de trois minutes dans cet exemple. Cette durée permet au conducteur de se mettre à l'abri, c'est-à-dire hors de portée du car-jacker qui prend en main le véhicule. Le blocage du moteur interdit son redémarrage jusqu'à l'introduction d'un code secret dans les conditions visées ci-après. A la même étape 25, une alarme est transmise au centre d'appels 7.

Après réception de cette alarme, le centre d'appels 7, au cours du test de l'étape 26, demande le code secret au conducteur du véhicule automobile. En cas de réception du code secret par le centre d'appels (flèche « O »), le véhicule automobile est autorisé à démarrer après une durée prédéterminée, et le procédé peut recommencer à l'étape 21.

En cas de non réception du code secret par le centre distant (flèche « N») - c'est-à-dire une absence de transmission ou une transmission de code erroné - une alerte de vol et la géolocalisation du véhicule sont transmises par le centre d'appels 7 à un service d'intervention de la police à l'étape 27 « ALERT », puis, à l'étape 28 « INFORMATION », le système de gestion 10 diffuse un message préenregistré dans l'habitacle par un autre haut-parleur 8 : au moins un message choisi par le centre d'appels 7 informe le conducteur du véhicule automobile qu'une procédure de recherche de voiture est lancée par le service de police. En complément à cette étape 28, l'avertisseur sonore est avantageusement déclenché dans le véhicule (par le haut-parleur 6 de la figure 1) pendant une durée prédéterminée, 2 minutes dans l'exemple de réalisation.

L'invention n'est pas limitée aux exemples de réalisation décrits et représentés. Ainsi, l'absence ou la présence d'un conducteur peut être détectée par une ou plusieurs caméras. De plus, le blocage du moteur par la fonction anti car-jacking peut également se produire après l'expiration d'une durée correspondant à une distance suffisante entre le conducteur légitime et le véhicule conduit par le car-jacker, un nombre prédéterminé de redémarrages successifs, à une vitesse prédéterminée prise par le véhicule, ou encore à tout paramètre du même type (accélération, maintien d'une vitesse minimale, etc.).

En outre, l'équipement de téléphonie mobile peut fonctionner avec tout réseau de téléphonie mobile.

L'alarme envoyée pour l'alerte de vol peut être un message texte, ou un message oral préenregistré sur l'équipement de téléphonie.

Enfin, ce procédé est applicable aux véhicules équipés de tout type de moteur, en particulier un moteur électrique.

## Revendications

1. Procédé d'antivol de véhicule automobile avec déclenchement d'alarme, ce procédé utilisant des fonctionnalités d'un système de gestion (10) du véhicule et d'un centre distant (7) par téléphonie mobile avec le véhicule, ainsi que des données relatives à l'état et/ou au changement d'état du véhicule, de son habitacle et de son moteur d'entraînement, **caractérisé en ce qu'**il consiste à activer une fonction anti car-jacking (étape 21) dès le démarrage du moteur (étape 20), arrêter le moteur et déclencher une alarme (étape 25) vers le centre distant (7) avec une géolocalisation du véhicule lorsque les conditions suivantes sont réunies :
- vitesse de déplacement du véhicule nulle (étape 22), correspondant à un état du moteur déterminé entre moteur en marche, en état « stop » dans le cas d'intervention d'une fonction de type « stop and go », et en état arrêté par une coupure d'alimentation du moteur ;
- intégrité du véhicule mise en cause (étape 23) par une ouverture d'ouvrant de l'habitacle du véhicule ; et
- détection de changement de conducteur (étape 24).

2. Procédé d'antivol selon la revendication 1, dans lequel, suite au déclenchement de l'alarme (étape 25), le centre distant transmet une demande de communication d'un code secret prédéfini (étape 26) au conducteur du véhicule automobile: en cas de réception dudit code secret par le centre distant (7), le véhicule automobile est autorisé à démarrer après une durée prédéterminée et, en cas de non réception du code secret par le centre distant (7), ce dernier transmet une alerte de vol (étape 27) avec la géolocalisation du véhicule à un service d'intervention.

3. Procédé d'antivol selon la revendication précédente, dans lequel, en cas de non réception du code secret par le centre distant (7), le centre distant (7) déclenche la diffusion dans le véhicule via le système de gestion (10) d'au moins un message préenregistré d'information (étape 28).

4. Procédé d'antivol selon l'une quelconque des revendications 2 ou 3, dans lequel, en cas de non réception du code secret par le centre distant, celui-ci déclenche également, via le système de gestion, une sonnerie d'alarme (6) dans le véhicule pendant une durée prédéterminée.

5. Procédé d'antivol selon l'une quelconque des revendications précédentes, dans lequel l'atteinte à l'intégrité du véhicule (étape 23) est définie par au moins l'une des actions suivantes: une ouverture de portière, une ouverture de vitre et un bris de vitre.

6. Procédé d'antivol selon l'une quelconque des revendications précédentes, dans lequel la détection d'un changement de conducteur (étape 24) est choisie parmi au moins l'une des conditions suivantes: un déverrouillage de ceinture de sécurité, le non-verrouillage de cette ceinture, une détection d'une absence temporaire sur le siège du conducteur, une détection d'un changement de conducteur et une absence temporaire de mains sur le volant.

7. Procédé d'antivol selon l'une quelconque des revendications précédentes, dans lequel le démarrage et l'arrêt de ce procédé peuvent être déclenchés par une même commande, notamment sur un écran tactile d'aide à la conduite.

8. Procédé d'antivol selon l'une quelconque des revendications précédentes, dans lequel l'activation du procédé d'antivol avec déclenchement d'alarme est paramétrée soit avec un mode manuel d'activation différée, soit un mode automatique d'activation immédiate.

9. Procédé d'antivol selon l'une quelconque des revendications précédentes, dans lequel une interruption temporaire de la fonction anti car-jacking est possible (étape 21 bis) dans le cas d'une activation automatique de cette fonction, en particulier pour permettre un changement de conducteur.

10. Véhicule automobile comportant un moteur principal, un habitacle avec des ouvrants et un siège conducteur, et un système de gestion (10) de mise en oeuvre du procédé d'antivol selon l'une quelconque des revendications précédentes, **caractérisé en ce que** le système de gestion (10) comporte un boitier électronique (1) relié à des détecteurs de vitesse (D1) du véhicule, d'état des ouvrants (D2) et de présence (D3) dans le siège conducteur, ainsi qu'à une commande d'arrêt du moteur (A1), et **en ce que** le boitier électronique (1) est également relié à un équipement de téléphonie mobile (5) en liaison avec un traceur GPS (4), pouvant communiquer une alarme (flèche F1) ainsi qu'à un haut-parleur (8) pouvant diffuser, dans l'habitacle, des messages préenregistrés dans le boitier électronique (1).
